Europäisches Patentamt

European Patent Office

Office européen des brevets

(11) Veröffentlichungsnummer: **0 170 824**
**A1**

# (12) EUROPÄISCHE PATENTANMELDUNG

(21) Anmeldenummer: **85107165.4**

(22) Anmeldetag: **11.06.85**

(51) Int. Cl.⁴: **G 01 K 1/14**

(30) Priorität: **06.07.84 DE 8420215 U**

(43) Veröffentlichungstag der Anmeldung: **12.02.86**
**Patentblatt 86/7**

(84) Benannte Vertragsstaaten: **AT BE CH DE FR GB IT LI LU NL SE**

(71) Anmelder: **Degussa Aktiengesellschaft, Weissfrauenstrasse 9, D-6000 Frankfurt am Main 1 (DE)**

(72) Erfinder: **Schwarz, Fritz, Im Ellenbügel 38, D-6456 Langenselbold (DE)**

(54) **Elektrisches Thermometer zur Messung von Temperaturen auf Oberflächen.**

(57) Es wird ein elektrisches Thermometer zur Temperaturmessung auf Oberflächen beschrieben, bei dem der Meßeinsatz auf die Oberfläche angepreßt und bei Auswechseln des zu messenden Gegenstandes leicht entkoppelt werden kann. Dazu ist im Gehäuse eine Rückholfeder eingebaut und der zumindest teilweise aus ferromagnetischem Material bewegliche Meßeinsatz von einer Magnetspule umgeben.

EP 0 170 824 A1

0170824
84 161 ET

Degussa Aktiengesellschaft

Weissfrauenstrasse 9, 6000 Frankfurt am Main


Elektrisches Thermometer zur Messung von Temperaturen
auf Oberflächen


**Die Erfindung** betrifft ein elektrisches Thermometer zur Messung von Temperaturen auf Oberflächen, insbesondere in Vertiefungen, wobei ein stiftförmiger, temperaturempfindlicher Meßeinsatz axial beweglich in einem Gehäuse geführt und mit einer Spiralfeder axial fixiert ist.

Bei der Messung von Temperaturen auf Oberflächen wird eine Temperaturanzeige angestrebt, die möglichst genau der Temperatur auf dieser Oberfläche entspricht. In der Praxis können sich zwischen angezeigter und tatsächlicher Temperatur größere Differenzen ergeben, die oft auf einer unzureichenden thermischen Ankoppelung des Temperaturfühlers auf der zu messenden Oberfläche beruhen.

Es sind elektrische Thermometer bekannt, bei denen ein stiftförmiger, temperaturempfindlicher Meßeinsatz axial beweglich in einem Schutzgehäuse untergebracht, von einer Spiralfeder axial fixiert und auf die zu messende Oberfläche aufgepresst wird, indem das Schutzgehäuse in entsprechender Relation zum Gegenstand mit der zu messenden Oberfläche befestigt wird. Dadurch wird in den meisten Fällen eine gute und dauerhafte Kontaktierung bzw. thermische Ankoppelung erreicht, die für eine exakte Oberflächentemperaturmessung unerlässlich ist. Diese Konstruktion hat allerdings den Nachteil, daß beim Auswechseln des zu messenden Gegenstandes meistens das elektrische Thermometer demontiert werden muß, insbesondere wenn die zu messende Oberfläche vertieft in diesem Gegenstand sich befindet, beispielsweise in einem Sackloch.

Es war daher Aufgabe der vorliegenden **Erfindung, ein** elektrisches Thermometer zur Messung von Temperaturen auf Oberflächen, insbesondere in Vertiefungen zu schaffen, wobei ein stiftförmiger, temperaturempfindlicher Meßeinsatz axial beweglich in einem Gehäuse geführt und mit einer Spiralfeder axial fixiert ist, bei dem der zu messende Gegenstand ohne Demontage des Thermometers leicht ausgewechselt werden kann.

Diese Aufgabe wurde **erfindungsgemäß dadurch gelöst, daß** die Spiralfeder als Rückholfeder ausgebildet ist und daß der Meßeinsatz von einer Magnetspule umgeben ist und zumindest im Bereich der Magnetspule aus einem ferromagnetischen Material besteht oder mit einem solchen ummantelt ist.

Das Andrücken und damit die thermische Ankoppelung des Meßeinsatzes an die zu messende Oberfläche erfolgt durch die stromdurchflossene Magnetspule, die auf das ferromagnetische Material des Meßeinsatzes wirkt. Sobald der Strom abgeschaltet wird, hebt die Rückholfeder den Messeinsatz von der Meßoberfläche ab, sodaß der Gegenstand ohne Demontage des Thermometers leicht ausgewechselt werden kann.

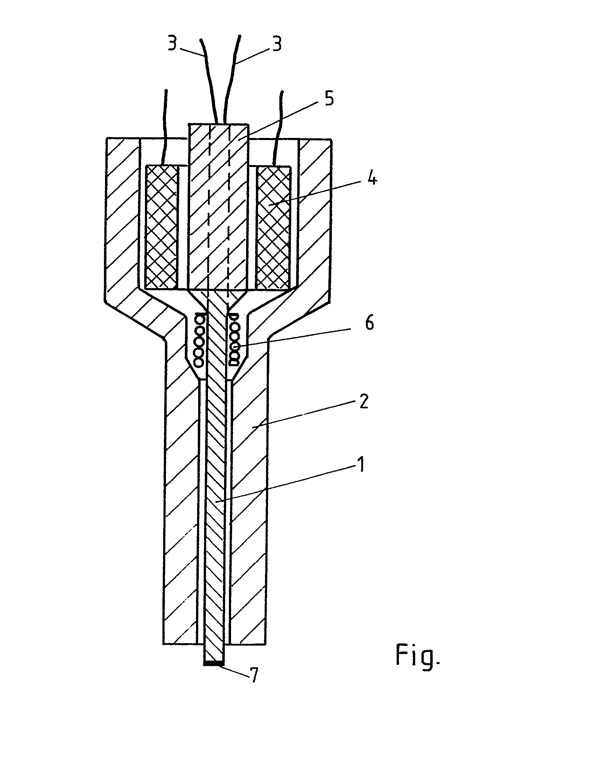

Die Abbildung zeigt schematisch in beispielhafter Ausführungsform einen Längsschnitt durch ein neuerungsgemäßes elektrisches Thermometer. Das Thermometer besteht aus einem Meßeinsatz (1), der axial beweglich in einem Gehäuse (2) angeordnet und mit Anschlüssen (3) versehen ist. Der Meßeinsatz (1) ist im oberen Bereich von einer Magnetspule (4) umgeben und mit einer Hülse (5) aus einem ferromagnetischen Material ummantelt. Wird durch die Magnetspule (4) ein elektrischer Strom geleitet, wird der ferromagnetische "Kern" der Spule bewegt und die Meßspitze (7) des Meßeinsatzes (1) auf die zu messende Oberfläche angepresst. Nach Beendigung der Messung oder beim Auswechseln des zu messenden Gegenstandes wird der Magnetspulenstrom unterbrochen und die Rückholfeder (6) hebt den Messeinsatz (1) von der Oberfläche ab.

0170824
84 161 ET

Degussa Aktiengesellschaft
Weissfrauenstrasse 9, 6000 Frankfurt am Main

**Patentanspruch**

Elektrisches Thermometer zur Messung von Temperaturen auf Oberflächen, insbesondere in Vertiefungen, wobei ein stiftförmiger, temperaturempfindlicher Meßeinsatz axial beweglich in einem Gehäuse geführt und mit einer Spiralfeder axial fixiert ist,
<u>dadurch gekennzeichnet,</u>
daß die Spiralfeder als Rückholfeder (6) ausgebildet ist und daß der Meßeinsatz (1) von einer Magnetspule (4) umgeben ist und zumindest im Bereich der Magnetspule (4) aus einem ferromagnetischen Material (5) besteht oder mit einem solchen ummantelt ist.

Fig.

Europäisches
Patentamt

**EUROPÄISCHER RECHERCHENBERICHT**

0170824
Nummer der Anmeldung

EP  85 10 7165

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X,Y | DE-B-1 145 824  (UNITED KINGDOM ATOMIC ENERGY AUTHORITY) <br> * Figur, Einführung; Spalte 3, Zeile 5 - Spalte 4, Zeile 35 * | 1 | G 01 K  1/14 |
| Y | C. WINDRED u.a.: "Electromagnets and Windings", 1943, Kapitel III "Solenoid electromagnets", London, GB; <br> * Kapitel III, Absätze 1-7; Seiten 33-48 * | 1 | |
| Y,X | FR-A-2 381 298  (IRSID) <br> * Figur 2; Seite 5, Zeile 36 - Seite 7, Zeile 14 * | 1 | |
| Y | LU-A- 82 590  (METTLER INSTRUMENTE AG) <br> * Figur; insgesamt * | 1 | RECHERCHIERTE SACHGEBIETE (Int. Cl.4) <br><br> G 01 K |

Der vorliegende Recherchenbericht wurde für alle Patentansprüche erstellt.

| Recherchenort | Abschlußdatum der Recherche | Prüfer |
|---|---|---|
| DEN HAAG | 05-11-1985 | VISSER F.P.C. |